Europäisches Patentamt

European Patent Office

Office européen des brevets

(19)

(11) Numéro de publication: **0 088 655**
**B1**

(12) # FASCICULE DE BREVET EUROPEEN

(45) Date de publication du fascicule du brevet:
**19.06.85**

(21) Numéro de dépôt: **83400335.2**

(22) Date de dépôt: **17.02.83**

(51) Int. Cl.⁴: **B 01 J 3/02**, B 01 J 8/00,
C 08 F 2/34, C 08 F 10/00

(54) **Dispositif et procédé pour la vidange, par le fond, d'un réacteur de polymérisation à lit fluidisé.**

(30) Priorité: **26.02.82 FR 8203204**

(43) Date de publication de la demande:
**14.09.83 Bulletin 83/37**

(45) Mention de la délivrance du brevet:
**19.06.85 Bulletin 85/25**

(84) Etats contractants désignés:
**AT BE DE FR GB IT NL SE**

(56) Documents cités:
**EP - A - 0 071 430**
**FR - A - 2 164 500**
**GB - A - 1 582 828**
**GB - A - 2 018 138**

(73) Titulaire: **BP Chimie Société Anonyme, Tour Neptune -
La Défense 1 20, place de Seine, F-92400 Courbevoie
(FR)**

(72) Inventeur: **Raufast, Charles, Quartier les Cabanes,
F-13500 Saint-Julien-les-Martigues (FR)**

(74) Mandataire: **Chambert, Jean-Paul et al, BP CHIMIE -
Tour Neptune Cédex No 20, F-92086 Paris La
Défense 1 (FR)**

BUNDESDRUCKEREI BERLIN

## Description

La présente invention concerne un dispositif et un procédé pour réaliser la vidange, par le fond, d'un réacteur de polymérisation à lit fluidisé.

Il est connu de polymériser à l'état gazeux des alpha-oléfines telles que l'éthylène, ou des mélanges d'alpha oléfines telles que l'éthylène, le propylène, le butène-1, en présence d'une composition catalytique comprenant par example a) un composé solide d'un métal de transition des sous-groupes IVa, Va et VIa de la Classification Périodique des Éléments, notamment le titane, ce composé pouvant également comprendre du magnésium, et b) un composé organométallique d'un métal des groupes I, II ou II de la Classification Périodique, notamment un composé organoaluminique. De telles compositions catalytiques possédant une activité élevée ont en particulier été décrites dans les brevets français 2 099 311, 2 116 698 et 2 144 080.

Il est également connu que les polymérisations et copolymérisations des alpha-oléfines, dans lesquelles ou utilise les catalyseurs très actifs décrits ci-dessus, ou des catalyseurs équivalents, peuvent être réalisées par la technique du lit fluidisé. Ces polymérisations et copolymérisations sont alors généralement effectuées dans un réacteur à axe vertical dans lequel les granules du polymère en formation sont maintenus à l'état fluidisé par un courant gazeux ascendant contenant l'oléfine ou les oléfines à polymériser. Un tel réacteur comporte habituellement, à sa partie inférieure, une plaque perforée ou poreuse — couramment appelée sole de fluidisation — que permet de répartir dans l'enceinte le courant gazeux introduit sous la sole par une tubulure et de maintenir, dans l'enceinte, les granules de polymère à l'état fluidisé au-dessus de la sole. Une tuyauterie letérale d'évacuation située au-dessus de la sole permet d'évacuer en continu ou périodiquement du réacteur une partie du polymère qui s'y trouve contenu.

Au cours de la mise en œure d'un tel réacteur à lit fluidisé, il peut être utile de vidanger, en totalité ou en partie, le lit fluidisé contenu entre la sole et le niveau de la tuyauterie d'évacuation.

Il peut, par example, être nécessaire de pratiquer une telle opération lors d'un changement de qualité du polymère fabriqué, afin d'éviter de mélanger des polymères de qualités différentes; dans un tel cas, la plus grande partie du polymère contenu dans le réacteur peut être retirée de celui-ci par la conduite d'évacuation, mais la fraction de polymère subsistant entre la plaque perforée et la tuyauterie d'évacuation ne peut être vidangée de cette manière. Il est à noter en outre qu'il peut exister dans la partie inférieure du réacteur, au niveau de la sole et à proximité de celle-ci, des zones dans lequelles le polymère n'est pas à l'état fluidisé. Ce phénomène peut résulter, par example, de l'existence de renforts mécaniques sous la sole, qui réduisent localement la porosité de celle-ci; dans ces zones, notamment, le polymère peut exister sous la forme d'agglomérats peu mobiles ou immobiles.

Il peut également être utile, au cours même d'une opération de polymérisation, de soutirer une partie du lit fluidisé contenu dans la partie inférieure du réacteur afin, par example, de prélever un échantillon du polymère à ce niveau.

Dans les appareils dans lesquelles on réalise des réactions en lit fluidisé, par example des réactions catalytiques entre au moins un composé gazeux et au moins un catalyseur solide à l'état fluidisé, on a déjà décrit la possibilité de soutirer, en totalité ou en partie, les particules solides à l'utilisation d'un tube de vidange vertical dont l'ouverture supérieure se trouve au niveau de la sole et dont l'ouverture inférieure obturée à l'état de fonctionnement normal une vanne, se situe en dessous de l'appareil. Un tel dispositif très simple d'évacuation des particules fluidisées n'est pas utilisable, en l'état, pour les réactions de polymérisation ou de copolymérisation réalisées dans le cadre de la présente invention, car le polymère formé sur les particules catalytiques entraînerait inévitablement le bouchage du tube de vidange.

Le procédé et le dispositif selon la présente invention visent à résoudre le problème de l'évacuation partielle ou totale des particules fluidisées situées immédiatement au-dessus de la sole d'un appareil de polymérisation ou de copolymérisation d'oléfines en lit fluidisé.

Le dispositif d'évacuation selon l'invention est caractérisé en ce qu'il comporte:

— une tuyauterie verticale dont l'ouverture supérieure se situe au niveau de la sole et dont l'ouverture inférieure, située à l'extérieur et au-dessus du fond du réacteur, est obturée par un robinet à ouverture rapide,
— un tube d'amenée de gaz dans ladite tuyauterie verticale, débouchant au voisinage immédiat dudit robinet.

La »tuyauterie verticale« doit avoir un diamètre intérieur d'au moins 10 et de préférence d'au moins 100 fois le diamètre moyen des particules de polymère ou de copolymère qui forment le lit fluidisé. Si ces particules ont, un diamètre moyen de 1 mm, le diamètre intérieur de la tuyauterie sera choisi de préférence entre 30 et 300 mm; un diamètre intérieur insuffisant, inférieur à environ 10 mm, risquerait de provoquer des bouchages, et un diamètre trop large risquerait de provoquer des difficultés soit en ce qui concerne l'étanchéité du robinet, soit en ce qui concerne des perturbations dans le lit fluidisé.

La »tuyauterie verticale« aura une longueur au moins égale à environ 3 fois, et de préférence au moins égale à 5 fois son diamètre intérieur; cette longueur est nécessaire pour que l'on puisse assurer dans cette tuyauterie, grâce à l'amenée de gaz, un écoulement souhaité de type dit à »effet piston«. Un tel écoulement est obtenu lorsque l'on amène, par ledit tube d'amenée de gaz, un courant gazeux ayant une vitesse comprise entre 5 et 50 fois et de préférence entre 10 et 30 fois environ la vitesse minimale de gaz qui provoquerait la fluidisation des particules de polymère dans la tuyauterie verticale. Une vitesse insuffisante provoquerait des bouchages et une vitesse importante entraînerait des perturbations au niveau du lit fluidisé.

Ledit robinet est de préférence consistué d'un robinet à passage intégral tel que par example un robinet à boisseau, et doit pouvoir être ouvert en un temps très court, par example en un temps inférieur à 5 s et, de préférence inférieur à 3 s.

Bien que le robinet puisse déboucher directement dans un bac à l'air libre, c'est-à-dire sous la pression atmosphérique, il est parfois souhaitable, notamment lorsque l'on veut prélever des échantillons sans de perturbations notables dans le lit fluidisé, que ledit robinet débouche dans une trémie de volume détermié, elle-même munie d'un dispositif de sortie. Dans ce cas, le prélèvement s'effectuera en ouvrant rapidement le robinet, le dispositif de sortie de la trémie étant fermé, puis en fermant ledit robinet, et après dégazage éventuel, en recueillant le polymère par ledit dispositif de sortie.

Pour que l'ouverture du robinet provoque bien une évacuation de la quantité souhaitée de polymère fluidisé, il convient:

— que le rapport de la pression existant dans le réacteur à celle existant à la partie extérieure du robinet à ouverture rapide, c'est-à-dire à l'air libre dans la trémie, soit supérieur à 5 et de préférence compris entre 10 et 25, la différence entre ces deux pressions étant en outre supérieure à 0,4 MPa et de préférence comprise entre 0,9 et 2,4 MPa,
— que, dans le cas où il existe une trémie, il y ait un certain rapport entre le volume du réacteur et celui de la trémie; ce rapport doit être compris entre 1000/l et 10/l et, de préférence, compris entre 200/l et 30/l.

Généralement, le volume de la trémie sera nettement plus important que le volume de la tuyauterie verticale; on considère que le volume de la trémie doit être supérieur à environ 8 fois, et de préférence supérieur à 10 fois, le volume de ladite tuyauterie verticale.

Lorsque toutes ces contitions sont réunies, on a constaté que l'ouverture rapide du robinet avait pour conséquence l'entraînement quasi immédiat dans la trémie d'un volume du lit fluidisé sensiblement égal au volume de la trémie.

Les examples non limitatifs illustrent l'invention; ces examples sont schématisés pour ce qui concerne l'appareillage sur les figures 1, 2 et 3.

La figure 1 est un schéma simplifié de la partie basse d'un réacteur à lit fluidisé, utilisé dans le cadre de la présente invention.

La figure 2 est un schéma simplifié de la partie basse dudit réacteur (figure 1) comportant un dispositif selon l'invention.

La figure 3 est un schéma simplifié de la partie basse dudit réacteur (figure 1) comportant un dispositif selon l'invention, dispositif utilisant une trémie.

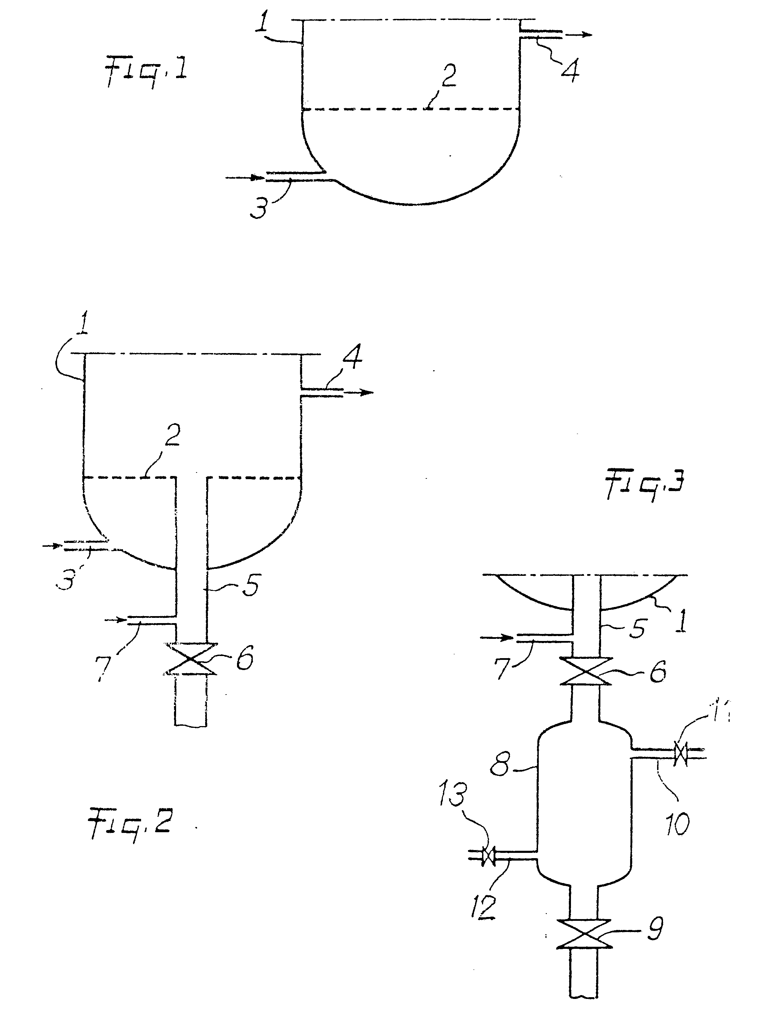

Sur la figure 1, on a schématisé:

— en (1) un réacteur de polymérisation en lit fluidisé, qui comporte, au voisinage de son fond,
— en (2) une plaque perforée ou poreuse qui constitue la sole de fluidisation,
— en (3) un tube d'arrivée du gaz de polymérisation (monomère ou monomères contenant éventuellement un gaz inerte et des gaz d'addition),
— en (4) une tuyauterie latérale située au-dessus de la sole (2), qui permet en marche normale une évacuation continue ou périodique du réacteur.

Ces divers éléments, (1), (2), (3), (4), de l'appareillage de polymérisation en lit fluidisé demeurent pratiquement inchangés dans le dispositif de la présente invention.

Le dispositif selon l'invention de la figure 2 comporte donc un réacteur à lit fluidisé, une sole, une tuyauterie d'amenée des gaz et une sortie latérale; il comporte également:

— en (5) la tuyauterie verticale; cette tuyauterie pénètre dans l'enceinte par la partie inférieure du réacteur et débouche au niveau de la sole (2), de préférence vers le centre de cette sole,
— en (6), à la partie basse, extérieure au réacteur, de cette tuyauterie verticale, le robinet à ouverture rapide,
— et, au voisinage de ce robinet, en (7) un tube d'amenée de gaz.

Un autre dispositif selon l'invention est schématisé sur la figure 3; ce dispositif diffère de celui de la figure 2 par la présence immédiatement au voisinage du robinet à ouverture rapide (6),

— en (8) d'une trémie qui est une enceinte fermée de volume déterminé, fermée par un dispositif de sortie (9) qui peut être un robinet à ouverture rapide au robinet (6).

Le dispositif selon l'invention est mis en oeuvre de la façon suivante:

Le polymère contenue dans le réacteur (1) étant maintenu à l'état fluidisé par introduction d'un gaz contenant les alpha-oléfines à polymériser dans le tube (3), on introduit en permanence un gaz dans le tube (7); ce gaz peut être un gaz inerte tel que l'azote ou un mélange gazeux contenant les alpha-oléfines à polymériser, à une température suffisamment basse pour que la vitesse de polymérisation du polymère présent dans le tube (5) soit pratiquement nulle. La vitesse ascendante du gaz dans le tube (5) doit être comprise entre 5 et 50 fois la vitesse minimale de fluidisation du polymère dans le tube (5). De préférence, la vitesse ascensionelle du gaz dans le tube (5) est telle que le polymère susceptible d'être présent dans ce tube (5) est entraîné vers le haut par un effet dit de piston. Dans un écoulement de ce type, les échanges de chaleur entre gaz et solide sont très intenses, ce qui permet de refroidir efficacement le polymère susceptible d'être présent le tube (5).

Afin de soutirer du polymère du réacteur (1), on ouvre le robinet (6) de manière à mettre le tube (5) en communication avec la trémie (8) ou avec tout autre dispositif dans lequel la pression soit nettement plus faible que celle régnant dans le réacteur (1); la vitesse d'ouverture du robinet (6) est choisie de telle sorte que le courant gazeux créé de haut en bas dans le tube (5) ne soit pas contrarié par le courant gazeux introduit par le tube (7).

Il peut être utile, lorsque réacteur (1) contient des agglomérats de polymère, de créer des perturbations des écoulements gazeux au voisinage de la sole (2), par une ouverture plus rapide du robinet (6) qui provoque un effet dit »de chasse«. Le robinet (6) est maintenu ouvert pendant quelques secondes afin de permettre, par example, dans le cas de la variante de la figure 3, de remplir au moins partiellement la trémie (8) de polymère. Après fermeture du robinet, on évacue vers l'extérieur le polymère présent dans la trémie (8), par ouverture du robinet (9). Après fermeture du robinet (9) et rétablissement de la pression voulue dans la trémie (8), un nouveau soutirage peut être effectué.

Il a été constaté que l'introduction permanente d'un gaz par le tube (7) ne contrarie pas le fonctionnement du dispositif de l'invention, tout en permettant d'éviter le bouchage du tube (5). En effet, lorsque le soutirage est effectué alors que le polymère contenu dans la réacteur (1) est à une température suffisante pour que le polymérisation se poursuive, le polymère contenu dans le tube (5) au moment de la fermeture du robinet (6) serait susceptible de s'échauffer sensiblement sous l'effet de la chaleur dégagée par la polymérisation. Si cette chaleur n'était pas très rapidement entraînée par un courant gazeux, ce phénomène entraînerait une fusion au moins superficielle des granules de polymère et pourrait donner à une prise en masse du polymère à l'intérieur du tube (5).

Il peut être utile d'équiper la trémie (8) des tuyauteries (10) et (12) munies respectivement des robinets (11) et (13).

Aussitôt après remplissage de la trémie (8) et fermeture du robinet (6), il est en effet souhaitable, afin d'éviter tout risque de poursuite de la polymérisation dans la trémie (8), d'ouvrir le robinet (11) pour faire baisser rapidement la pression régnant dans la trémie (8), puis, par ouverture du robinet (13) et introduction d'un gaz inerte par la conduite (12), d'assurer une circulation de ce gaz inerte à travers la poudre de polymère pendant un temps suffisant pour éliminer les résidus du mélange gazeux de polymérisation.

Les robinets (11) et (13) sont ensuite fermés avant évacuation de la poudre contenue dans la trémie (8) par ouverture du robinet (9).

Ainsi que cela a pu être constaté après plusieurs années d'exploitation, le dispositif de l'invention permet de réaliser, dans d'excellentes conditions de fonctionnement et de sécurité, la vidange totale des réacteurs de polymérisation d'alpha-oléfines en lit fluidisé, sans qu'il soit nécessaire d'interrompre l'alimentation du réacteur en gaz de fluidisation. On évite ainsi tout risque de contamination de l'installation qui peut, soit rester en opération, soit être remise en route sans délai.

Exemple

On effectue une polymérisation de l'éthylène à l'aide d'une installation comprenant un réacteur à lit fluidisé dont la partie basse comporte un dispositif de vidange selon l'invention, ce dispositif étant assoié à une trémie, conformément aux schémas des figures 1, 2, 3.

Le réacteur (1) de forme cylindrique de diamètre 40 cm, a un volume total de 2000 l. La tuyauterie latérale (4) qui assure l'évacuation du polymère en marche normale, est située à 1,5 m au-dessus du niveau de la plaque (2).

Les particules constituant la poudre de polyéthylène maintenue à l'état fluidisé dans le réacteur, ont un diamètre moyen de 0,5 mm.

Le volume de la trémie (8) est de 50 l. La longueur de la tuyauterie verticale (5) est de 600 mm, son diamètre intérieur de 100 mm.

Le robinet (6) est de type à boisseau sphérique. Il est actionné par une commande pneumatique assurant son ouverture complète en 0,5 s environ.

Le tube d'amenée de gaz (7) dont le diamètre intérieur est de 37 mm, est parcouru de façon permanente par un débite gazeux de 25 m$^3$/h environ, de même composition et à la même température que le gaz alimentant le réacteur par la conduite (3).

Il en résulte que, le robinet (6) étant fermé, la vitesse du courant gazeux dans la tuyauterie verticale (5) est d'environ 0,8 m/s, soit environ 12 fois la vitesse minimum de fluidisation de la poudre de polyéthylène présente dans le réacteur.

Pour vider le réacteur, on évacue d'abord la fraction de la poudre de polymère située au-dessus du niveau de la conduite d'évacuation (4) à l'aide de cette conduite.

On procède ensuite à la vidange totale de la poudre de polymère contenue dans le fond du réacteur, au-dessous du niveau de la tuyauterie latérale (4).

La pression de 2,1 MPa existant dans le réacteur au cours de la polymérisation, est maintenue constante, celle existant dans la trémie est de 0,2 MPa.

On effectue les manoeuvres suivantes:

— on ouvre le robinet (6) et on laisse ce robinet ouvert pendant environ 10 secondes, le robinet (9) ainsi que les robinets (11) et (12) restant fermés, et le courant gazeux arrivant par la conduite (7) étant maintenu constant;

— on referme le robinet (6), puis, pour éviter tout risque de poursuite de la polymérisation dans la trémie (8), on ouvre aussitôt le robinet (11) situé sur la conduite (10) afin d'abaisser rapidement la pression dans la trémie d'environ 2,1 MPa à environ 0,2 MPa;

— on fait circuler ensuite pendant quelques minutes à travers la poudre de polyéthylène contenue la trémie (8), un courant d'azote introduit par la conduite (12) grâce à l'ouverture du robinet (13);

— on referme ensuite les robinets (11) et (13) et on recueille le contenue de la trémie par ouverture du robinet (9), soit environ 50 litres de poudre de polyéthylène.

Lorsque la trémie (8) est vidée, on referme le robinet (9) et on répète l'exécution des manoeuvres indiquées ci-dessus jusqu'à vidange totale du réacteur (1).

## Revendications

1. Procédé permettant l'évacuation partielle ou totale d'un lit fluidisé, dans lequel se réalise une polymérisation (ou copolymérisation) d'alpha-oléfine gazeuse sur un catalyseur solide fluidisé, ladite polymérisation étant effectuée dans un réacteur comportant, en sa partie basse, une sole, une arrivée de gaz située entre ladite sole et le fond du réacteur, une tuyauterie latérale au-dessus de ladite sole et permettant l'évacuation de particules fluidisées, une tuyauterie d'évacuation verticale débouchant, d'une part, au niveau de la sole et, d'autre part, dans une trémie, ladite tuyauterie d'évacuation comportant un robinet à ouverture rapide et un tube d'amenée de gaz qui débouche dans ladite tuyauterie entre la sole et ledit robinet, caractérisé en ce que:

— la polymérisation est réalisée à une pression telle que le rapport des pressions existant entre l'intérieur du réacteur et l'intérieur de ladite trémie, lorsque ledit robinet est fermé, est supérieur à 5 et de préférence compris entre 10 et 25, la différence entre ces deux pressions étant en outre supérieure à 0,4 MPa et, de préférence, comprise entre 0,9 et 2,4 MPa;

— par le tube d'amenée de gaz est admise une quantité de gaz telle que, lorsque ledit robinet est fermé, le courant gazeux dans ladite tuyauterie d'évacuation verticale ait une vitesse comprise entre 5 et 50 fois environ la vitesse minimale des gaz, qui provoquerait la fluidisation des particules de polymères dans ladite tuyauterie,

— ladite évacuation est réalisée en ouvrant ledit robinet à ouverture rapide.

2. Dispositif d'évacuation partielle ou totale d'un lit fluidisé dans lequel se déroule une polymérisation ou copolymérisation d'oléfine, dispositif permettant la mise en oeuvre du procédé selon la revendication 1, caractérisé en ce que:

— ladite tuyauterie d'évacuation verticale a un diamètre intérieur égal à au moins 10 fois, de préférence au moins 100 fois, le diamètre moyen des particules de polymère fluidisées et une longueur au moins égale à environ 3 fois diamètre intérieur,

— ledit tube d'amenée de gaz débouche au voisinage immédiat dudit robinet à ouverture rapide,

— et le volume de ladite trémie est compris entre 0,001 et 0,1 fois le volume du réacteur et est égal à au moins 8 fois le volume de ladite tuyauterie verticale.

## Patentansprüche

1. Verfahren zum teilweisen oder vollständigen Austragen einer Wirbelschicht, in der sich eine Polymerisation (oder Copolymerisation) eines gasförmigen $\alpha$-Olefins auf einem verwirbelten festen Katalysator vollzieht, wobei die Polymerisation in einem Reaktor durchgeführt wird, umfassend in seinem unteren Teil einen Rost, eine Gaszuführung zwischen dem Rost und dem Reaktorboden, eine oberhalb des Rostes angeordnete seitliche Leitung zum Austrag der verwirbelten Teilchen, eine vertikale Austragsleitung, die einerseits auf der Höhe des Rostes und andererseits in einem Bunker mündet und die einen Hahn, der schnell geöffnet werden kann, und ein Gaseinleitungsrohr umfaßt, das in die (vertikale) Abzugsleitung zwischen dem Rost und dem Hahn einmündet, dadurch gekennzeichnet, daß

die Polymerisation bei einem solchen Druck ausgeführt wird, daß das Verhältnis der im Inneren des Reaktors und dem Inneren des Bunkers bei geschlossenem Hahn vorherrschenden Drücke mehr als 5 und vorzugsweise 10 bis 25 beträgt, der Unterschied zwischen diesen beiden Drükken darüber hinaus mehr als 0,4 MPa und vorzugsweise 0,9 bis 2,4 MPa beträgt; über die Gaszuleitung eine solche Menge Gas zugeführt wird, daß bei geschlossenem Hahn der Gasstrom in der vertikalen Austragsleitung eine Geschwindigkeit aufweist, die das 5- bis 50fache etwa der minimalen Gasgeschwindigkeit beträgt, die die Verwirbelung der Polymerteilchen in dieser Leitung hervorrufen würde, der Austrag erfolgt, indem man den sich schnell öffnenden Hahn öffnet.

2. Vorrichtung zum teilweisen oder vollständigen Austragen eines Wirbelbettes, in dem eine Polymerisation oder Copolymerisation eines Olefins abläuft und die die Durchführung des Verfahrens nach Anspruch 1 ermöglicht, dadurch gekennzeichnet, daß der Innendurchmesser der vertikalen Austragsleitung mindestens das 10fache, vorzugsweise das 100fache des mittleren Durchmessers der verwirbelten Polymerteilchen und die Länge mindestens das 3fache des Innendurchmessers beträgt,

das Gaseinleitungsrohr in der unmittelbaren Nachbarschaft des Hahns, der schnell geöffnet werden kann, mündet, und das Volumen des Bunkers das 0,001- bis 0,1fache des Reaktorvolumens und mindestens das 8fache des Volumens der vertikalen Abzugsleitung ausmacht.

## Claims

1. Process permitting the partial or total evacuation of a fluidised bed in which a polymerisation or a copolymerisation of gazeous alpha-olefin is being carried out on a solid fluidised catalyst, the said polymerisation or copolymerisation being effected in a reactor comprising in its bottom part a plate, a gas inlet situated between the said plate and the bottom of the reactor, a lateral pipe located above the said plate for the discharge of fluidised particles, a vertical evacuation piping having having an opening at the level of the plate and leading into a funnel, the said vertical piping being occluded by a cock with high-speed opening, and a gas inlet tube leading into the said vertical piping between the plate and said cock, the process beeing characterised by the fact that:

— the ratio of pressure existing in the reactor to that existing in said funnel when said cock with high-speed opening is closed, is greater than 5 and preferably comprised between 10 and 25, the difference between these two pressures being in addition greater than 0,4 MPa and preferably between 0,9 and 2,4 Mpa,

— a quantity of gas is admitted via the gas inlet tube such that when said cock is closed, the gaseous stream in the vertical piping has a speed between approximatively 5 and 50 times the minimum speed of the gases which would cause fluidisation of the polymer particles in the said piping,

— said evacuation is carried out by opening the said cock with high-speed opening.

2. Device for the parial or total evacuation of a fluidised bed in which a polymerisation or a copolymerisation of gaseous alpha-olefin is being carried out, and permitting the carrying out of the process according to claim 1, the said device being characterised by the fact that:

— the said vertical piping has an internal diameter equal to at least 10 times, preferably at least 100 times, the mean diameter of the fluidised polymer particles and has a length at least equal to approximatively 3 times the said internal diameter,

— the said gas inlet tube leads into the said vertical piping in the immediate vicinity of the said cock with high-speed opening,

— the volume of the said funnel is comprised between 0,001 and 0,1 times the volume of the reactor and is at least 8 times the volume of the said vertical piping.

Fig.1

Fig.2

Fig.3